# EUROPÄISCHE PATENTSCHRIFT

(11) **EP 3 339 602 B1**
(45) Veröffentlichungstag und Bekanntmachung des Hinweises auf die Patenterteilung: **28.08.2019**
(21) Anmeldenummer: 17204929.8
(22) Anmeldetag: 01.12.2017
(51) Int. Cl.: F02B 75/04, F02D 15/02, F16C 7/06

(54) **PLEUEL FÜR EINE BRENNKRAFTMASCHINE MIT VARIABLER VERDICHTUNG**
CONNECTING ROD FOR A COMBUSTION ENGINE WITH VARIABLE COMPRESSION
BIELLE POUR UN MOTEUR À COMBUSTION INTERNE À COMPRESSION VARIABLE

(30) Priorität: 22.12.2016 DE 102016125460; 15.09.2017 DE 102017121425
(43) Veröffentlichungstag der Anmeldung: 27.06.2018
(73) Patentinhaber: ECO Holding 1 GmbH, 97828 Marktheidenfeld (DE)
(72) Erfinder: Kaufmann, Dietmar, 97837 Tiefenthal (DE); Diehm, Alexander, 97877 Wertheim - Dertingen (DE)

(56) Entgegenhaltungen:
- EP-A1- 2 843 209
- WO-A1-2015/173391
- DE-A1-102014 109 452
- DE-A1-102015 109 922
- DE-A1-102015 122 393

## Beschreibung

### Technisches Gebiet

Die Erfindung betrifft einen Pleuel für eine Brennkraftmaschine mit variabler Verdichtung und ein Verfahren zur Herstellung eines solchen Pleuels sowie eine Brennkraftmaschine mit variabler Verdichtung mit einem Pleuel.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulischen Umschaltventilen eine Exzenter-Verstelleinrichtung eines Pleuels betätigen.

Die DE 10 2013 014 090 A1 beschreibt beispielsweise den zweiteiligen Aufbau eines Exzenterhebels, dessen Exzenterhebelsegmente mittels Verbindungsbolzen verbunden sind.

### Offenbarung der Erfindung

Eine Aufgabe der Erfindung ist es, einen verbesserten, kostengünstigen Pleuel für eine Brennkraftmaschine mit variabler Verdichtung zu schaffen, welches eine hohe Lebensdauer aufweist.

Eine weitere Aufgabe ist es, ein Verfahren zur Herstellung eines solchen Pleuels sowie eine Brennkraftmaschine mit variabler Verdichtung mit einem solchen Pleuel zu schaffen.

Die vorgenannten Aufgaben werden nach einem Aspekt der Erfindung gelöst mit den Merkmalen der unabhängigen Ansprüche.

Günstige Ausgestaltungen und Vorteile der Erfindung ergeben sich aus den weiteren Ansprüchen, der Beschreibung und der Zeichnung.

Es wird ein Pleuel für eine Brennkraftmaschine mit variabler Verdichtung vorgeschlagen, umfassend ein Hublagerauge zur Anbindung des Pleuels an eine Kurbelwelle der Brennkraftmaschine, ein Pleuellagerauge zur Anbindung des Pleuels an einen Zylinderkolben der Brennkraftmaschine, sowie eine Exzenter-Verstelleinrichtung zur Verstellung einer effektiven Pleuelstangenlänge, wobei die Exzenter-Verstelleinrichtung einen mit einem Exzenterhebel zusammenwirkenden Exzenter aufweist, in welchem bestimmungsgemäß ein Kolbenbolzen des Zylinderkolbens aufnehmbar ist. Die Exzenter-Verstelleinrichtung weist wenigstens einen Zylinder mit einem Kolben auf, der in einer Zylinderbohrung verschiebbar geführt und mit einer Stützstange verbunden ist. Weiter weist der Exzenterhebel zwei Exzenterhebelsegmente auf, welche über wenigstens einen Verbindungsbolzen verbunden sind, mit welchem die Stützstange gelenkig verbunden ist. Der wenigstens eine Verbindungsbolzen ist als Zylinderrolle ausgebildet, welcher mit Endbereichen an Außenflächen der Exzenterhebelsegmente herausragt und welcher wenigstens in diesen Endbereichen wärmebehandelt ausgebildet ist.

Erfindungsgemäß sind die zwei Exzenterhebelsegmente des Exzenterhebels über zwei Zylinderrollen als Verbindungsbolzen verbunden, die gleichzeitig die Achse, bzw. die Lagerung der Stützstangen der Exzenter-Verstelleinrichtung bilden. Vorteilhaft können die beiden Exzenterhebelsegmente des Exzenterhebels durch zwei Zylinderrollen, die durch einen Pressverband gesichert sind, zu einer Einheit vormontiert werden. Durch Anlassen, mittels einer Wärmebehandlung, der Endbereiche der Zylinderrollen im Bereich der Stirnseiten der Zylinderrollen ist eine weitere axiale Sicherung der Zylinderrollen durch einen Umformprozess - z.B. einen Nietprozess - möglich. Als Zylinderrollen können dabei vorteilhaft DIN-Normteile verwendet werden, welche in großer Stückzahl kostengünstig zu beschaffen sind. DIN-Zylinderrollen sind normalerweise komplett durchgehärtet.

Alternativ zu den DIN-Zylinderrollen können partiell gehärtete Zylinderrollen zum Einsatz kommen, die jedoch auch an den Stirnseiten angelassen, also wärmebehandelt, werden müssen, um einen Umformprozess an den Endbereichen durchführen zu können.

Vorteile der Erfindung bestehen darin, dass durch die Pressverbindung zwischen den Zylinderrollen und dem Exzenterhebel eine präzise Vormontage möglich ist. Die Zylinderrollen als Normteile sind kostengünstig herstellbar. Weiterhin wird durch das Einpressen der harten Bauteile ein "Fressen" verhindert. Der Anlassprozess ist kostengünstig durchführbar. Außerdem bilden die gehärteten Zylinderflächen der Zylinderrollen einen günstigen Reibpartner für die darauf gelagerte Stützstange.

Weiter ist durch Anlassen der Stirnseiten der Zylinderrollen eine Verformung der Endbereiche durch einen Umformprozess möglich. Dadurch können die Zylinderrollen in dem Verband des Exzenterhebels gegen ein unbeabsichtigtes Herausgleiten gesichert werden.

Gemäß einer vorteilhaften Ausgestaltung können die Endbereiche des wenigstens einen Verbindungsbolzens zur axialen Sicherung nach der Montage im Exzenterhebel umgeformt vorgesehen sein, wodurch die Exzenterhebelsegmente nicht mehr von den Verbindungsbolzen heruntergleiten können. Dadurch kann die Baugruppe des Exzenterhebels nach der Montage gesichert werden.

Gemäß einer vorteilhaften Ausgestaltung können die Endbereiche vernietet vorgesehen sein. Günstigerweise kann beispielsweise Taumelnieten oder Radialpunktnieten eingesetzt werden, um die Endbereiche von den Stirnseiten der Zylinderbolzen her umzuformen und zu vernieten. Auf diese Weise können die Endbereiche der Zylinderbolzen so in ihrem Durchmesser vergrößert werden, dass die Exzenterhebelsegmente nicht mehr von den Zylinderbolzen heruntergleiten können.

Gemäß einer vorteilhaften Ausgestaltung kann der wenigstens eine Verbindungsbolzen in einem Bereich der gelenkigen Lagerung der Stützstange partiell gehärtet vorgesehen sein. Die partiell gehärteten Zylinderflächen der Zylinderrollen bilden einen günstigen Reibpartner für die darauf gelagerte Stützstange der Exzenter-Verstelleinrichtung. Auf diese Weise sind günstige Laufeigenschaften eines Lagers der Exzenterhebelsegmente auf der Zylinderrolle gegeben, wodurch der Verschleiß der Exzenterhebelsegmente reduziert wird. Außerdem wird die Zylinderrolle in dem Lagerbereich dadurch ausreichend verschleißfest und abriebsicher.

Gemäß einer vorteilhaften Ausgestaltung kann der Bereich der gelenkigen Lagerung wenigstens in einem Oberflächenbereich partiell gehärtet vorgesehen sein. Vorteilhafterweise kann wenigsten der Oberflächenbereich partiell gehärtet sein, um günstige Laufeigenschaften der Zylinderrollen in den Exzenterhebelsegmenten zu erreichen. Beispielsweise ist es vorteilhaft, wenn wenigstens wenige Zehntel Millimeter Material unter der Oberfläche der Zylinderrollen im Lagerbereich gehärtet sind.

Gemäß einer vorteilhaften Ausgestaltung können die Endbereiche in einem Bereich eines Überstandes axial außerhalb des Bereichs der gelenkigen Lagerung wärmebehandelt vorgesehen sein. Der angelassene Bereich der Zylinderrolle kann vorteilhaft nur in dem Bereich des Überstandes außerhalb des Lagerbereichs vorliegen, während der Lagerbereich selbst günstigerweise gehärtet vorgesehen ist. So kann der Endbereich günstig umgeformt, beispielsweise vernietet werden, während der Lagerbereich vorteilhaft gehärtet bleibt, wie es für die Laufeigenschaften der Zylinderrolle günstig ist.

Gemäß einer vorteilhaften Ausgestaltung können die Endbereiche mittels eines Laserprozesses wärmebehandelt vorgesehen sein. Laservorrichtungen zum Anlassen der Zylinderrollen sind zweckmäßig einzusetzen. Damit lassen sich günstige Anlasswerte, beispielsweise im Bereich 35-40HRC erreichen, wie es für Norm-Zylinderrollen mit Durchmessern von 5 bis 6 Millimetern vorteilhaft ist.

Gemäß einer vorteilhaften Ausgestaltung können die Endbereiche mittels einer induktiven Erwärmung wärmebehandelt vorgesehen sein. Alternativ ist auch denkbar, den Anlassprozess mittels einer induktiven Erwärmung durchzuführen. Auch auf diese Weise kann der Anlassbereich der Zylinderrolle genügend räumlich eingeschränkt werden, so dass nur der Bereich des Überstandes der Zylinderrolle außerhalb des Exzenterhebelsegments angelassen wird, während der Lagerbereich der Zylinderrolle gehärtet bleibt.

Gemäß einer vorteilhaften Ausgestaltung kann der wenigstens eine Verbindungsbolzen in Lagerbohrungen der Exzenterhebelsegmente eingepresst vorgesehen sein. Günstigerweise kann der Verbindungsbolzen bei der Vormontage des Exzenterhebels in die Lagerbohrungen der Exzenterhebelsegmente eingepresst werden. Dadurch ist die Baugruppe zweckmäßigerweise vorläufig fixiert und kann vorteilhaft durch Anlassen und Vernieten gegen Herausgleiten von Zylinderrolle und/oder Exzenterhebelsegment gesichert werden.

Nach einem weiteren Aspekt der Erfindung wird ein Verfahren zur Herstellung eines Pleuels vorgeschlagen, umfassend wenigstens die Schritte: Vormontieren von wenigstens zwei Exzenterhebelsegmenten durch Einpressen von wenigstens einem Verbindungsbolzen in Lagerbohrungen der Exzenterhebelsegmente, wobei der Verbindungsbolzen als Zylinderrolle ausgebildet ist, welcher mit Endbereichen an Außenflächen der Exzenterhebelsegmente herausragt, sowie Durchführen einer Wärmebehandlung wenigstens an diesen Endbereichen.

Vorteilhaft können die Verbindungsbolzen in gehärtetem Zustand in die Lagerbohrungen eingepresst werden, wodurch eine Spanbildung durch Abrieb an den Verbindungsbolzen vermieden werden kann. Nach der Vormontage können die Endbereiche der Verbindungsbolzen zweckmäßig wärmebehandelt, also angelassen werden, um die Endbereiche wieder so weit aufzuweichen, dass ein anschließender Umformprozess auf einfache Weise möglich ist.

Gemäß einer vorteilhaften Ausgestaltung können die Endbereiche des wenigstens einen Verbindungsbolzens zur axialen Sicherung nach der Montage im Exzenterhebel umgeformt werden. Durch Umformen lassen sich die Endbereiche der Verbindungsbolzen aufweiten, so dass die Exzenterhebelsegmente nicht mehr von den Verbindungsbolzen heruntergleiten können. Dadurch kann die Baugruppe des Exzenterhebels nach der Montage gesichert werden.

Gemäß einer vorteilhaften Ausgestaltung können die Endbereiche vernietet werden. Günstigerweise kann beispielsweise Taumelnieten eingesetzt werden, um die Endbereiche von den Stirnseiten der Zylinderbolzen her umzuformen und zu vernieten. Auf diese Weise können die Endbereiche der Zylinderbolzen so in ihrem Durchmesser vergrößert werden, dass die Exzenterhebelsegmente nicht mehr von den Zylinderbolzen heruntergleiten können.

Gemäß einer vorteilhaften Ausgestaltung können die Endbereiche mittels eines Laserprozesses oder eines induktiven Prozesses wärmebehandelt werden. Laservorrichtungen zum Anlassen der Zylinderrollen sind zweckmäßig einzusetzen. Damit lassen sich günstige Anlasswerte, beispielsweise im Bereich 35 - 40 HRC erreichen, wie es für Norm-Zylinderrollen mit Durchmessern von 5 bis 6 Millimetern vorteilhaft ist.

Alternativ ist auch denkbar, den Anlassprozess mittels einer induktiven Erwärmung durchzuführen. Auch auf diese Weise kann der Anlassbereich der Zylinderrolle genügend räumlich eingeschränkt werden, so dass nur der Bereich des Überstandes der Zylinderrolle außerhalb des Exzenterhebelsegments angelassen wird, während der Lagerbereich der Zylinderrolle gehärtet bleibt.

Gemäß einer vorteilhaften Ausgestaltung kann eine Eindringtiefe der Wärmebehandlung so gewählt werden, dass nur ein Oberflächenbereich der Endbereiche wärmebehandelt wird. Parameter der Wärmebehandlung der Verbindungsbolzen können dabei vorteilhaft so gewählt werden, dass die Verbindungsbolzen nicht zu tief angelassen werden, so dass die Verbindungsbolzen eine genügende Resthärte für gute und verschleißfeste Laufeigenschaften aufweisen und auf der anderen Seite der Umformprozess der Endbereiche auf günstige Weise möglich ist.

Nach einem weiteren Aspekt der Erfindung wird eine Brennkraftmaschine mit wenigstens einem Pleuel vorgeschlagen. Dabei kann vorteilhaft ein Pleuel wie vorstehend beschrieben verwendet werden, um auf günstige Weise eine Exzenter-Verstelleinrichtung zu realisieren sowie einen vorteilhaften Verbrennungsprozess und damit Kraftstoffverbrauch in der Brennkraftmaschine umzusetzen.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen erfindungsgemäßen Pleuel im Längsschnitt;
- Fig. 2: den Pleuel gemäß Fig. 1 in einem zweiten Längsschnitt und
- Fig. 3: einen Exzenterhebel des Pleuels gemäß Fig. 1 und 2 in räumlicher, teilweise geschnittener Darstellung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

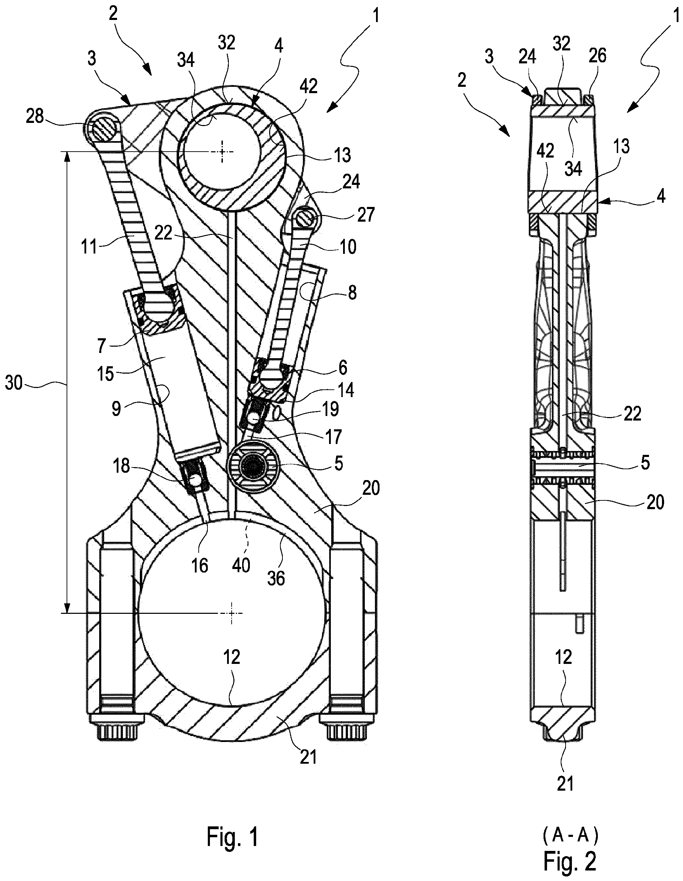

Figur 1 zeigt in schematischer Darstellung einen erfindungsgemäßen Pleuel 1 für eine variable Verdichtung einer Brennkraftmaschine, mit einer Exzenter-Verstelleinrichtung 2 zur Verstellung einer effektiven Pleuelstangenlänge 30, welche als Abstand der Mittelachse des Hublagerauges 12 von der Mittelachse der Bohrung des Exzenters 4 als Aufnahme eines Kolbenbolzens definiert ist,. Die Exzenter-Verstelleinrichtung 2 weist einen mit einem mehrteiligen Exzenterhebel 3 zusammenwirkenden Exzenter 4 auf, in welchem ein nicht gezeigter Kolbenbolzen eines Zylinderkolbens aufgenommen wird. Ein Verstellweg der Exzenter-Verstelleinrichtung 2 ist mittels eines Umschaltventils 5 verstellbar.

Eine Verdrehung der verstellbaren Exzenter-Verstelleinrichtung 2 wird durch Einwirken von Massenkräften und Lastkräften der Brennkraftmaschine initiiert, die bei einem Arbeitstakt der Brennkraftmaschine auf die Exzenter-Verstelleinrichtung 2 wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen oder mehrere mit Hydraulikflüssigkeit, insbesondere mit Motoröl, beaufschlagte, im Pleuel 1 integrierte Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte.

Die Kolben 6, 7 sind jeweils in einer Zylinderbohrung 8, 9 eines Hydraulikzylinders 14, 15 des Pleuels 1 verschiebbar geführt und mit Stützstangen 10, 11 verbunden, welche ihrerseits mit dem Exzenterhebel 3 gelenkig verbunden sind.

Der Pleuel 1 weist ein Hublagerauge 12 zur Anbindung des Pleuels 1 an eine Kurbelwelle einer Brennkraftmaschine sowie ein Pleuellagerauge 13 zur Anbindung des Pleuels 1 an einen Zylinderkolben der Brennkraftmaschine auf.

Die Kolben 6, 7 sind in den durch die Zylinderbohrungen 8, 9 gebildeten Hydraulikkammern 14, 15 verschiebbar angeordnet und über Zuläufe 16, 17 von dem Hublagerauge 12 aus mit Hydraulikflüssigkeit, beispielsweise Motoröl über Rückschlagventile 18, 19 beaufschlagt. Diese verhindern dabei ein Rückfließen der Hydraulikflüssigkeit aus den Hydraulikkammern 14, 15 zurück in die Zuläufe 16, 17, ermöglichen jedoch ein Nachsaugen von Hydraulikflüssigkeit in die Hydraulikkammern 14, 15.

Die Hydraulikkammern 14, 15 sind weiter über nicht dargestellte Abläufe mit dem Umschaltventil 5 verbunden, welches als Hydraulikventil oder als mechanisches Ventil ausgebildet sein kann.

Wie aus Figur 1 ersichtlich ist, weist der Pleuel 1 einen Pleuelkörper 20 und einen daran befestigten Pleueldeckel 21 auf.

Um eine optimale Schmierung von Exzenter 4 und Kolbenbolzen zu erhalten, welche für die Funktion der Exzenter-Verstelleinrichtung 2 wesentlich ist, kann in dem Pleuelkörper 20 eine erste Bohrung 22 als Steigleitung angeordnet sein, welche zur Versorgung einer radial äußeren und radial inneren Lagerfläche 32, 34 des Exzenters 4 mit Hydraulikflüssigkeit aus einem Versorgungsanschluss 40 vorgesehen ist.

Auf diese Weise kann auf der radial äußeren Lagerfläche 32 zwischen dem Pleuellagerauge 13 und dem Exzenter 4 und auf der radial inneren Lagerfläche 34 zwischen dem Exzenter 4 und dem Kolbenbolzen ein Schmierfilm mit Hydraulikflüssigkeit aufgebaut werden. Die Hydraulikflüssigkeit, beispielweise Motoröl, gelangt aus dem Hublagerauge 12 als Versorgungsanschluss 40 in die Bohrung 22.

Wie ersichtlich, erstreckt sich die erste Bohrung 22 ausgehend vom Hublagerauge 12 bis zum Pleuellagerauge 13. Dabei ist es für die Herstellung von Vorteil, wenn die Bohrung 22 geradlinig verläuft. Eine Verbindung zum Umschaltventil 5 ist nicht erforderlich. Der sogenannte Galeriedruck, d.h. der Druck der Hydraulikflüssigkeit, welcher an der Kurbelwelle anliegt, drückt die Hydraulikflüssigkeit durch die Bohrung 22 in Richtung Pleuellagerauge 13.

Auf einem Umfang des Hublagerauges 12 ist im Bereich des Pleuelkörpers 20 eine zweite Nut 36 zur Versorgung der ersten Bohrung 22 mit Hydraulikflüssigkeit aus dem Versorgungsanschluss 40 vorgesehen. Die zweite Nut 36 kann eine zuverlässige Versorgung der ersten Bohrung 22 mit Hydraulikflüssigkeit sicherstellen. Dadurch, dass die zweite Nut 36 nur auf einem Teil des Umfangs des Hublagerauges 12 angeordnet ist, wird auch die Tragfähigkeit des Lagers in dem Hublagerauge 12 möglichst wenig beeinträchtigt.

Figur 2 zeigt der Pleuel 1 aus Figur 1 in einem zweiten, um 90° gedrehten Längsschnitt. Es ist zu erkennen, dass das Umschaltventil 5 die gesamte Tiefe des Pleuelkörpers 20 einnimmt. Die Bohrung 22 erstreckt sich in der Mitte des Pleuelkörpers 20 von dem Hublagerauge 12 bis zum Pleuellagerauge 13. Der Exzenterhebel 3 ist zweiteilig ausgeführt mit je einem Exzenterhebelsegment 24, 26 zu beiden Seiten des Pleuellagerauges 13.

Zur Verteilung der Hydraulikflüssigkeit wenigstens über die radial äußere Lagerfläche 32 kann eine wenigstens teilweise umlaufende erste Nut vorgesehen sein, welche mit der ersten Bohrung 22 hydraulisch verbunden ist. Die erste Nut, welche beispielsweise mittig am Exzenter 4 angeordnet ist, ermöglicht so eine optimale und gleichmäßige Verteilung der Hydraulikflüssigkeit über die äußere Lagerfläche 32 zwischen dem Exzenter 4 und dem Pleuellagerauge 13.

Alternativ könnte die erste Nut jedoch auch auf der Lagerfläche 32 des Pleuellagerauges 13 angeordnet sein.

Der Exzenter 4 kann ferner wenigstens eine zweite Bohrung als Schmierflüssigkeitsbohrung aufweisen, welche sich von der äußeren Lagerfläche 32 in Richtung Innenseite des Exzenters 4 zur inneren Lagerfläche 34 erstreckt, wobei die zweite Bohrung so angeordnet ist, dass die erste Nut und die zweite Bohrung in Wirkverbindung sind. Hierdurch kann gleichzeitig auch für eine optimale Schmierung zwischen Exzenter 4 und Kolbenbolzen gesorgt werden. Es können auch mehrere Bohrungen als Schmierflüssigkeitsbohrungen im Exzenter 4 vorgesehen sein.

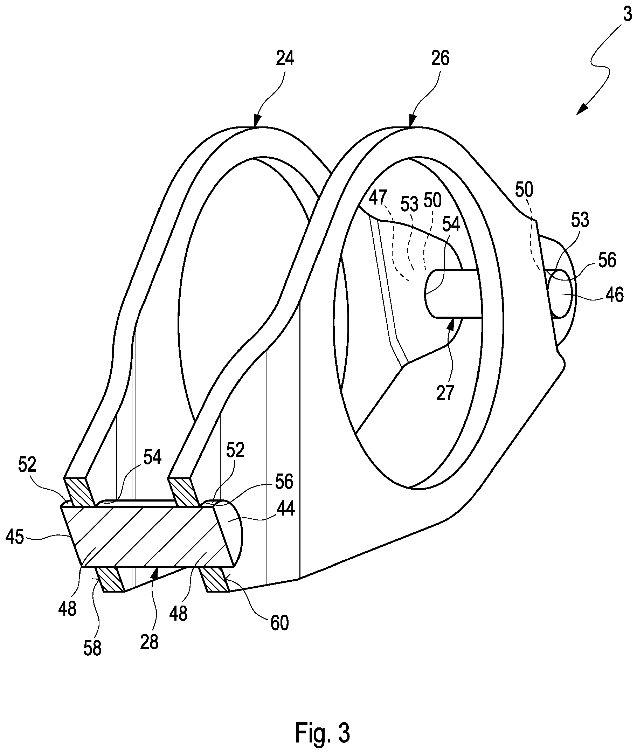

Wie insbesondere Figur 3 zu entnehmen ist, weist der Exzenterhebel 3 zwei Exzenterhebelsegmente 24, 26 auf, welche über zwei Verbindungsbolzen 27, 28 verbunden sind. Im Bereich des Verbindungsbolzens 28 ist der Exzenterhebel 3 geschnitten dargestellt. Die nicht dargestellten Stützstangen 10, 11 der Exzenter-Verstelleinrichtung 2 sind zur gelenkigen Verbindung mit den Verbindungsbolzen 27, 28 vorgesehen.

Um eine gesicherte Verbindung der Exzenterhebelsegmente 24, 26 und gleichzeitig eine optimale Lagerung der Stützstangen 10, 11 zu erzielen, sind die Verbindungsbolzen 27, 28 erfindungsgemäß als Zylinderrollen vorgesehen. Die Zylinderrollen 27, 28 werden dabei durch einen Pressverband gesichert und ermöglichen, den Exzenterhebel 3 als vormontierbare Einheit auszubilden. Die Exzenterhebelsegmente 24, 26 können kostengünstig und präzise verbunden werden. Beispielsweise können die Verbindungsbolzen 27, 28 in Lagerbohrungen 54, 56 der Exzenterhebelsegmente 24, 26 eingepresst werden. Um Spanbildung durch Abrieb von Material der Verbindungsbolzen 27, 28 zu vermeiden, können die Verbindungsbolzen 27, 28 vorzugsweise vor Durchführen des Wärmebehandlungsprozesses eingepresst werden, so dass die Wärmebehandlung erst an der vormontierten Exzenterhebel-Einheit erfolgen kann.

Aus Figur 3 ist ersichtlich, dass die Zylinderrollen 27, 28 derart lang ausgebildet sind, dass sie nach dem Einpressen in die Exzenterhebelsegmente 24, 26 mit ihren Endbereichen 44, 45, 46, 47 an Außenflächen 58, 60 der Exzenterhebelsegmente 24, 26 aus dem Exzenterhebel 3 herausragen.

Zur weiteren axialen Sicherung sind die Zylinderrollen 27, 28 in den Endbereichen 44, 45, 46, 47 wärmebehandelt ausgebildet, so dass ein Umformen, beispielsweise ein Nieten, möglich ist. Beispielsweise können die Endbereiche 44, 45, 46, 47 der Verbindungsbolzen 27, 28 nach der Wärmebehandlung umgeformt werden, so dass die Exzenterhebelsegmente 24, 26 nicht mehr von den Verbindungsbolzen 27, 28 heruntergleiten können. Dadurch kann die Baugruppe des Exzenterhebels 3 nach der Montage gesichert werden. Günstigerweise kann beispielsweise Taumelnieten eingesetzt werden, um die Endbereiche 44, 45, 46, 47 von den Stirnseiten der Zylinderbolzen 27, 28 her umzuformen und zu vernieten. Auf diese Weise können die Endbereiche der Zylinderbolzen 27, 28 so in ihrem Durchmesser vergrößert werden, dass die Exzenterhebelsegmente 24, 26 nicht mehr von den Zylinderbolzen 27, 28 heruntergleiten können.

Die Wärmebehandlung erfolgt beispielsweise durch Anlassen des Werkstoffes, beispielsweise mittels eines Laserprozesses oder einer induktiven Erwärmung. Eine Eindringtiefe der Wärmebehandlung kann vorteilhaft auch so gewählt werden, dass nur ein Oberflächenbereich der Endbereiche 44, 45, 46, 47 wärmebehandelt wird.

Vorteilhaft kann auch vorgesehen sein, dass die Endbereiche 44, 45, 46, 47 nur in einem Bereich eines Überstandes 52, 53 axial außerhalb des Bereichs der gelenkigen Lagerung 48, 50 wärmebehandelt werden. So kann der Endbereich 44, 45, 46, 47 günstig umgeformt, beispielsweise vernietet werden, während der Lagerbereich 48, 50 vorteilhaft gehärtet bleibt, wie es für die Laufeigenschaften der Zylinderrolle 27, 28 günstig ist.

Gemäß einer vorteilhaften Ausgestaltung kann eine Eindringtiefe der Wärmebehandlung so gewählt werden, dass nur ein Oberflächenbereich der Endbereiche 44, 45, 46, 47 wärmebehandelt wird. Parameter der Wärmebehandlung der Verbindungsbolzen 27, 28 können dabei vorteilhaft so gewählt werden, dass die Verbindungsbolzen 27, 28 nicht zu tief angelassen werden, so dass die Verbindungsbolzen 27, 28 eine genügende Resthärte für gute und verschleißfeste Laufeigenschaften aufweisen und auf der anderen Seite der Umformprozess der Endbereiche 44, 45, 46, 47 auf günstige Weise möglich ist.

Nach einem Ausführungsbeispiel der Erfindung können die Zylinderrollen im Bereich der gelenkigen Lagerung 48, 50 der Stützstangen 10, 11 partiell gehärtet vorgesehen sein. Die gehärteten Zylinderflächen bilden den idealen Reibpartner für die darauf gelagerte Stützstange 10, 11. Alternativ kann der Bereich der gelenkigen Lagerung 48, 50 wenigstens in einem Oberflächenbereich partiell gehärtet vorgesehen sein. Auf diese Weise sind günstige Laufeigenschaften eines Lagers der Exzenterhebelsegmente 24, 26 auf der Zylinderrolle 27, 28 gegeben, wodurch der Verschleiß der Exzenterhebelsegmente 24, 26 reduziert wird. Außerdem wird die Zylinderrolle 27, 28 in dem Lagerbereich 48, 50 dadurch ausreichend verschleißfest und abriebsicher.

Der Aufbau des beschriebenen Pleuels 1 ist nur beispielhaft dargestellt und die erfindungsgemäße Exzenterhebelverbindung kann auch in anderen Ausführungsvarianten eines Pleuels mit einer Exzenter-Verstelleinrichtung Anwendung finden. So ist es beispielsweise möglich, das Umschaltventil 5 im Bereich des Pleueldeckels 21 anzuordnen. Ferner können die beschriebenen Rückschlagventile 18, 19 im Umschaltventil 5 integriert vorgesehen sein. Auch die hydraulische Versorgung der Hydraulikkammern 14, 15 kann von der beschriebenen Ausführung abweichen.

## Patentansprüche

1. Pleuel (1) für eine Brennkraftmaschine mit variabler Verdichtung, umfassend ein Hublagerauge (12) zur Anbindung des Pleuels (1) an eine Kurbelwelle der Brennkraftmaschine,
ein Pleuellagerauge (13) zur Anbindung des Pleuels (1) an einen Zylinderkolben der Brennkraftmaschine,
eine Exzenter-Verstelleinrichtung (2) zur Verstellung einer effektiven Pleuelstangenlänge (30), wobei die Exzenter-Verstelleinrichtung (2) einen mit einem Exzenterhebel (3) zusammenwirkenden Exzenter (4) aufweist, in welchem bestimmungsgemäß ein Kolbenbolzen des Zylinderkolbens aufnehmbar ist,
wobei die Exzenter-Verstelleinrichtung (2) wenigstens einen Zylinder (14, 15) mit einem Kolben (6, 7) aufweist, der in einer Zylinderbohrung (8, 9) verschiebbar geführt und mit einer Stützstange (10, 11) verbunden ist,
wobei der Exzenterhebel (3) zwei Exzenterhebelsegmente (24, 26) aufweist, welche über wenigstens einen Verbindungsbolzen (27, 28) verbunden sind, mit welchem die Stützstange (10, 11) gelenkig verbunden ist,
wobei der wenigstens eine Verbindungsbolzen (27, 28) als Zylinderrolle ausgebildet ist, welcher mit Endbereichen (44, 45, 46, 47) an Außenflächen (58, 60) der Exzenterhebelsegmente (24, 26) herausragt und welcher wenigstens in diesen Endbereichen (44, 45, 46, 47) wärmebehandelt ausgebildet ist.

2. Pleuel nach Anspruch 1, wobei die Endbereiche (44, 45, 46, 47) des wenigstens einen Verbindungsbolzens (27, 28) zur axialen Sicherung nach der Montage im Exzenterhebel (3) umgeformt vorgesehen sind.

3. Pleuel nach Anspruch 2, wobei die Endbereiche (44, 45, 46, 47) vernietet vorgesehen sind.

4. Pleuel nach einem der vorhergehenden Ansprüche, wobei der wenigstens eine Verbindungsbolzen (27, 28) in einem Bereich der gelenkigen Lagerung (48, 50) der Stützstange (10, 11) partiell gehärtet vorgesehen ist.

5. Pleuel nach Anspruch 4, wobei der Bereich der gelenkigen Lagerung (48, 50) wenigstens in einem Oberflächenbereich partiell gehärtet vorgesehen ist.

6. Pleuel nach einem der vorhergehenden Ansprüche, wobei die Endbereiche (44, 45, 46, 47) in einem Bereich eines Überstandes (52, 53) axial außerhalb des Bereichs der gelenkigen Lagerung (48, 50) wärmebehandelt vorgesehen ist.

7. Pleuel nach einem der vorhergehenden Ansprüche, wobei die Endbereiche (44, 45, 46, 47) mittels eines Laserprozesses wärmebehandelt vorgesehen sind.

8. Pleuel nach einem der Ansprüche 1 bis 6, wobei die Endbereiche (44, 46) mittels einer induktiven Erwärmung wärmebehandelt vorgesehen sind.

9. Pleuel nach einem der vorhergehenden Ansprüche, wobei der wenigstens eine Verbindungsbolzen (27, 28) in Lagerbohrungen (54, 56) der Exzenterhebelsegmente (24, 26) eingepresst vorgesehen ist.

10. Verfahren zur Herstellung eines Pleuels (1) nach einem der vorhergehenden Ansprüche, umfassend wenigstens die Schritte:
- Vormontieren von wenigstens zwei Exzenterhebelsegmenten (24, 26) durch Einpressen von wenigstens einem Verbindungsbolzen (27, 28) in Lagerbohrungen (54, 56) der Exzenterhebelsegmente (24, 26), wobei der Verbindungsbolzen (27, 28) als Zylinderrolle ausgebildet ist, welcher mit Endbereichen (44, 45, 46, 47) an Außenflächen (58, 60) der Exzenterhebelsegmente (24, 26) herausragt,
- Durchführen einer Wärmebehandlung wenigstens an diesen Endbereichen (44, 45, 46, 47).

11. Verfahren nach Anspruch 10, wobei die Endbereiche (44, 46) des wenigstens einen Verbindungsbolzens (27, 28) zur axialen Sicherung nach der Montage im Exzenterhebel (3) umgeformt werden.

12. Verfahren nach Anspruch 11, wobei die Endbereiche (44, 45, 46, 47) vernietet werden.

13. Verfahren nach einem der Ansprüche 10 bis 12, wobei die Endbereiche (44, 45, 46, 47) mittels eines Laserprozesses oder eines induktiven Prozesses wärmebehandelt werden.

14. Verfahren nach einem der Ansprüche 10 bis 13, wobei eine Eindringtiefe der Wärmebehandlung so gewählt wird, dass nur ein Oberflächenbereich der Endbereiche (44, 45, 46, 47) wärmebehandelt wird.

15. Brennkraftmaschine mit wenigstens einem Pleuel (1) nach einem der Ansprüche 1 bis 9.

## Claims

1. Connecting rod (1) for an internal combustion engine with variable compression, comprising a crankpin bearing eye (12) for the attachment of the connecting rod (1) to a crankshaft of the internal combustion engine,
a connecting-rod bearing eye (13) for the attachment of the connecting rod (1) to a cylinder piston of the internal combustion engine,
an eccentric adjustment device (2) for the adjustment of an effective connecting rod length (30), wherein the eccentric adjustment device (2) has an eccentric (4) which interacts with an eccentric lever (3) and in which a piston pin of the cylinder piston can be intentionally received, wherein the eccentric adjustment device (2) has at least one cylinder (14, 15) with a piston (6, 7) which is guided displaceably in a cylinder bore (8, 9) and which is connected to a support rod (10, 11),
wherein the eccentric lever (3) has two eccentric lever segments (24, 26) which are connected by means of at least one connecting pin (27, 28) to which the support rod (10, 11) is articulatedly connected,
wherein the at least one connecting pin (27, 28) is formed as a cylinder roller which, with end regions (44, 45, 46, 47), projects out at outer surfaces (58, 60) of the eccentric lever segments (24, 26) and which is of heat-treated form at least in said end regions (44, 45, 46, 47).

2. Connecting rod according to Claim 1, wherein the end regions (44, 45, 46, 47) of the at least one connecting pin (27, 28) are, after the installation in the eccentric lever (3), provided so as to be deformed for axial securing purposes.

3. Connecting rod according to Claim 2, wherein the end regions (44, 45, 46, 47) are provided so as to be riveted.

4. Connecting rod according to any of the preceding claims, wherein the at least one connecting pin (27, 28) is provided so as to be partially hardened in a region of the articulated mounting (48, 50) of the support rod (10, 11).

5. Connecting rod according to Claim 4, wherein the region of the articulated mounting (48, 50) is provided so as to be partially hardened at least in a surface region.

6. Connecting rod according to any of the preceding claims, wherein the end regions (44, 45, 46, 47) are provided so as to be heat-treated in a region of a projecting length (52, 53) axially outside the region of the articulated mounting (48, 50).

7. Connecting rod according to any of the preceding claims, wherein the end regions (44, 45, 46, 47) are provided so as to be heat-treated by means of a laser process.

8. Connecting rod according to any of Claims 1 to 6, wherein the end regions (44, 46) are provided so as to be heat-treated by means of inductive heating.

9. Connecting rod according to any of the preceding claims, wherein the at least one connecting pin (27, 28) is provided so as to be pressed into bearing bores (54, 56) of the eccentric lever segments (24, 26).

10. Method for producing a connecting rod (1) according to any of the preceding claims, comprising at least the steps:
- preassembling at least two eccentric lever segments (24, 26) by pressing at least one connecting pin (27, 28) into bearing bores (54, 56) of the eccentric lever segments (24, 26), wherein the connecting pin (27, 28) is formed as a cylinder roller which, with end regions (44, 45, 46, 47), projects out at outer surfaces (58, 60) of the eccentric lever segments (24, 26),
- performing a heat treatment at least at said end regions (44, 45, 46, 47) .

11. Method according to Claim 10, wherein the end regions (44, 46) of the at least one connecting pin (27, 28) are, after the installation in the eccentric lever (3), deformed for axial securing purposes.

12. Method according to Claim 11, wherein the end regions (44, 45, 46, 47) are riveted.

13. Method according to any of Claims 10 to 12, wherein the end regions (44, 45, 46, 47) are heat-treated by means of a laser process or an inductive process.

14. Method according to any of Claims 10 to 13, wherein a penetration depth of the heat treatment is selected such that only a surface region of the end regions (44, 45, 46, 47) is heat-treated.

15. Internal combustion engine having at least one connecting rod (1) according to any of Claims 1 to 9.

## Revendications

1. Bielle (1) pour un moteur à combustion interne à compression variable, comprenant
un oeil de palier mobile (12) pour la liaison de la bielle (1) à un vilebrequin du moteur à combustion interne,
un oeil de coussinet de bielle (13) pour la liaison de la bielle (1) à un piston de cylindre du moteur à combustion interne,
un dispositif de réglage à excentrique (2) pour le réglage d'une longueur de bielle effective (30), dans lequel le dispositif de réglage à excentrique (2) présente un excentrique (4) coopérant avec un levier d'excentrique (3), dans lequel un axe de piston du piston de cylindre peut être correctement logé,
dans laquelle le dispositif de réglage à excentrique (2) présente au moins un cylindre (14, 15) avec un piston (6, 7), qui est guidé de façon coulissante dans un alésage de cylindre (8, 9) et qui est relié à une barre d'appui (10, 11),
dans laquelle le levier d'excentrique (3) présente deux segments de levier d'excentrique (24, 26), qui sont reliés par au moins un axe de liaison (27, 28), auquel la barre d'appui (10, 11) est reliée de façon articulée,
dans laquelle ledit au moins un axe de liaison (27, 28) est formé par un rouleau cylindrique, qui sort par des régions d'extrémité (44, 45, 46, 47) dans des faces extérieures (58, 60) des segments de levier d'excentrique (24, 26) et qui a subi un traitement thermique au moins dans ces régions d'extrémité (44, 45, 46, 47).

2. Bielle selon la revendication 1, dans laquelle les régions d'extrémité (44, 45, 46, 47) dudit au moins un axe de liaison (27, 28) sont prévues de façon déformée pour le blocage axial après le montage dans le levier d'excentrique (3).

3. Bielle selon la revendication 2, dans laquelle les régions d'extrémité (44, 45, 46, 47) sont prévues sous forme rivée.

4. Bielle selon l'une quelconque des revendications précédentes, dans laquelle ledit au moins un axe de liaison (27, 28) est prévu sous forme partiellement durcie dans une région de l'appui articulé (48, 50) de la barre d'appui (10, 11).

5. Bielle selon la revendication 4, dans laquelle la région de l'appui articulé (48, 50) est prévue sous forme partiellement durcie au moins dans une région superficielle.

6. Bielle selon l'une quelconque des revendications précédentes, dans laquelle les régions d'extrémité (44, 45, 46, 47) sont prévues sous une forme traitée thermiquement dans une région d'un dépassement (52, 53) axialement à l'extérieur de la région de l'appui articulé (48, 50).

7. Bielle selon l'une quelconque des revendications précédentes, dans laquelle les régions d'extrémité (44, 45, 46, 47) sont prévues sous forme traitée thermiquement au moyen d'un processus au laser.

8. Bielle selon l'une quelconque des revendications 1 à 6, dans laquelle les régions d'extrémité (44, 46) sont prévues sous forme traitée thermiquement au moyen d'un chauffage par induction.

9. Bielle selon l'une quelconque des revendications précédentes, dans laquelle ledit au moins un axe de liaison (27, 28) est prévu sous forme ajustée avec serrage dans des alésages de palier (54, 56) des segments de levier d'excentrique (24, 26).

10. Procédé de fabrication d'une bielle (1) selon l'une quelconque des revendications précédentes, comprenant au moins les étapes suivantes:
- pré-assembler au moins deux segments de levier d'excentrique (24, 26) par ajustement serré d'au moins un axe de liaison (27, 28) dans des alésages de palier (54, 56) des segments de levier d'excentrique (24, 26), dans lequel l'axe de liaison (27, 28) est formé par un rouleau cylindrique, qui sort avec des régions d'extrémité (44, 45, 46, 47) dans des faces extérieures (58, 60) des segments de levier d'excentrique (24, 26),
- effectuer un traitement thermique au moins sur ces régions d'extrémité (44, 45, 46, 47).

11. Procédé selon la revendication 10, dans lequel on déforme les régions d'extrémité (44, 46) dudit au moins un axe de liaison (27, 28) pour le blocage axial après le montage dans le levier d'excentrique (3).

12. Procédé selon la revendication 11, dans lequel on rive les régions d'extrémité (44, 45, 46, 47).

13. Procédé selon l'une quelconque des revendications 10 à 12, dans lequel on traite thermiquement les régions d'extrémité (44, 45, 46, 47) au moyen d'un processus au laser ou d'un processus par induction.

14. Procédé selon l'une quelconque des revendications 10 à 13, dans lequel on choisit la profondeur de pénétration du traitement thermique, de telle manière que seule une région superficielle des régions d'extrémité (44, 45, 46, 47) soit traitée thermiquement.

15. Moteur à combustion interne comportant au moins une bielle (1) selon l'une quelconque des revendications 1 à 9.
